# EUROPÄISCHE PATENTANMELDUNG

(11) **EP 4 807 504 A1**
(43) Veröffentlichungstag der Anmeldung: **16.09.2026**
(21) Anmeldenummer: 26153688.2
(22) Anmeldetag: 23.01.2026
(51) Int. Cl.: G06F 3/01, G05B 19/4061, G06T 19/00, B25J 9/16

(54) **SYSTEM, VERWENDUNG UND VERFAHREN ZUR BENUTZERFÜHRUNG UND/ODER BENUTZERINTERAKTION EINES BENUTZERS MIT OBJEKTEN IN EINER INDUSTRIEANLAGE**

(30) Priorität: 11.03.2025 DE 102025109178
(71) Anmelder: SICK AG, 79183 Waldkirch (DE)
(72) Erfinder: Baldischweiler, Boris, 79276 Reute (DE); Gebauer, Jens, 79312 Emmendingen (DE)
(74) Vertreter: Manitz Finsterwald Patent- und Rechtsanwaltspartnerschaft mbB

(57) **Zusammenfassung**

Die Erfindung betrifft ein System zur Benutzerführung eines Benutzers in einer Industrieanlage und/oder zur Benutzerinteraktion des Benutzers mit zumindest einem Objekt in der Industrieanlage, umfassend eine Benutzerschnittstelle und zumindest einen Umgebungssensor, der ausgebildet ist, eine Umgebung des Benutzers in einer Industrieanlage zu erfassen, wobei der Umgebungssensor zumindest einen Teil des Sichtfelds des Benutzers erfasst und dabei Daten über die Umgebung des Benutzers, insbesondere Daten über das Objekt in der Umgebung des Benutzers, zu gewinnen. Das System umfasst ferner zumindest einen Eye-Tracking-Sensor, der ausgebildet ist, den Blick des Benutzers zu erfassen und dabei Eye-Tracking-Daten zu gewinnen, und eine Verarbeitungsvorrichtung, die dazu ausgebildet ist, anhand der gewonnenen Daten über das Objekt einen Abstand, eine Position, eine Bewegungsrichtung und/oder eine Geschwindigkeit des Objekts zu ermitteln, anhand der gewonnenen Eye-Tracking-Daten einen Parameter für die Aufmerksamkeit des Benutzers auf das Objekt zu ermitteln, anhand des ermittelten Parameters für die Aufmerksamkeit des Benutzers auf das Objekt und anhand des ermittelten Abstands des Objekts, anhand der ermittelten Position des Objekts, anhand der ermittelten Bewegungsrichtung des Objekts und/oder anhand der ermittelten Geschwindigkeit des Objekts einen Gefahrenzustand zu erkennen, und auf die Erkennung des Gefahrenzustands hin die Benutzerschnittstelle zu veranlassen, ein, insbesondere, sicherheitsgerichtetes Signal auszugeben.

## Beschreibung

Die Erfindung betrifft ein System, eine Verwendung eines Systems und ein Verfahren zur Benutzerführung eines Benutzers in einer Industrieanlage und/oder zur Benutzerinteraktion des Benutzers mit zumindest einem Objekt in der Industrieanlage.

Benutzer können sich zusammen mit Objekten, beispielsweise mit autonomen mobilen (Industrie-)Robotern ("autonomous mobile robots", AMRs) und/oder fahrerlosen Transportfahrzeugen ("automated Guided Vehicles", AGVs), in den gleichen Bereichen in einer Industrieanlage aufhalten und/oder mit diesen zusammenarbeiten. Dies stellt sowohl Herausforderungen an den Personenschutz (z.B. die Vermeidung von Kollision zwischen den Objekten und dem Benutzer) als auch die Effizienz, da unerwünschten Stillstandzeiten der Objekte (z.B. verursacht durch einen Not-Stopp des Objekts ausgelöst durch eine Detektion einer Schutzfeldverletzung zumindest eines Sicherheitssensors auf dem Objekt) möglichst vermieden werden sollen. Mit einer Industrieanlage kann beispielsweise eine Lagerhalle, eine Produktionshalle, eine Anlage der chemischen Industrie, eine Anlage der Lebensmittelindustrie, eine Tierhaltungsanlage oder eine Anlage zur Energieerzeugung gemeint sein.

Der Benutzer bzw. der Werker führt oft anspruchsvolle Tätigkeiten in der Industrieanlage aus. Hierbei kann es vorkommen, dass sich der Benutzer mental bzw. kognitiv stark auf seine aktuell ausgeführte Tätigkeit konzentriert. Außerdem kann der sensorische Wahrnehmungsbereich des Benutzers beispielsweise durch eine Begrenzung des Gesichtsfelds, durch Wellenlängen außerhalb des sichtbaren Bereichs, sowie bei Geräuschen unterhalb der Wahrnehmungsgrenze oder außerhalb des wahrnehmbaren Frequenzbereichs limitiert sein. Beide Phänomene bringen die Gefahr mit sich, dass der Benutzer Objekte in seiner Umgebung nicht (rechtzeitig) wahrnimmt, was jedoch sicherheitsrelevant sein kann, wie z.B. die Wahrnehmung eines sich auf Kollisionskurs befindenden annähernden AMRs oder AGVs.

Der Erfindung liegt die Aufgabe zugrunde, die Mensch-Maschinen-Interaktion eines Benutzers mit Objekten in einer Industrieanlage zu verbessern.

Zur Lösung der Aufgabe ist System mit den Merkmalen des Anspruchs 1 vorgesehen.

Das erfindungsgemäße System zur Benutzerführung eines Benutzers in einer Industrieanlage und/oder zur Benutzerinteraktion des Benutzers mit zumindest einem Objekt in der Industrieanlage umfasst eine Benutzerschnittstelle und zumindest einen Umgebungssensor, der ausgebildet ist, eine Umgebung des Benutzers in einer Industrieanlage zu erfassen, wobei der Umgebungssensor zumindest einen Teil des Sichtfelds des Benutzers erfasst, und dabei Daten über die Umgebung des Benutzers, insbesondere Daten über das Objekt in der Umgebung des Benutzers, zu gewinnen. Das System umfasst ferner zumindest einen Eye-Tracking-Sensor, der ausgebildet ist, den Blick des Benutzers zu erfassen und dabei Eye-Tracking-Daten zu gewinnen. Das System umfasst ferner eine Verarbeitungsvorrichtung, die dazu ausgebildet ist, anhand der gewonnenen Daten über das Objekt einen Abstand, eine Position, eine Bewegungsrichtung und/oder eine Geschwindigkeit des Objekts zu ermitteln, anhand der gewonnenen Eye-Tracking-Daten einen Parameter für die Aufmerksamkeit des Benutzers auf das Objekt zu ermitteln, anhand des ermittelten Parameters für die Aufmerksamkeit des Benutzers auf das Objekt und anhand des ermittelten Abstands des Objekts, anhand der ermittelten Position des Objekts, anhand der ermittelten Bewegungsrichtung des Objekts und/oder anhand der ermittelten Geschwindigkeit des Objekts einen Gefahrenzustand zu erkennen, und auf die Erkennung des Gefahrenzustands hin die Benutzerschnittstelle zu veranlassen, ein, insbesondere sicherheitsgerichtetes, Signal auszugeben.

Kurz gesagt basiert die Erfindung auf der Idee, mittels der Erfassung der Umgebung und des Blicks des Benutzers die Bewegung des Objekts und die Aufmerksamkeit des Benutzers auf das Objekt zu ermitteln und basierend darauf einen Feedback-Mechanismus für die an den Benutzer ausgegebenen Hinweise und Informationen (insbesondere für die Menge an Informationen) und/oder die Steuerung des Objekts bereitzustellen. Eine geführte Wahrnehmung des Objekts kann realisiert werden, was den Benutzer in seinem Arbeitsprozess unterstützen und insgesamt die Effizienz der Arbeitsabläufe erhöhen kann. Auf diese Weise kann die Mensch-Maschinen-Interaktion überwacht und/oder effizienter gestaltet und/oder sicherer gestaltet werden.

Genauer kann mittels des Eye-Tracking-Sensors ermittelt werden, worauf der Benutzer seinen visuellen Fokus gesetzt hat und ob er etwaige Gefahrenquellen, wie z.B. ein sich näherndes AMR oder AGV, wahrscheinlich erkannt bzw. wahrgenommen hat. Der Benutzer kann bei Nichterkennen auf die Gefahr bzw. auf das sich annähernde Objekt visuell, haptisch oder akustisch aufmerksam gemacht werden. Beispielsweise kann ausgewertet werden, ob der Benutzer das sich auf Kollisionskurs befindende Objekt bewusst wahrgenommen hat. Hat er dies nicht, so kann seine Aufmerksamkeit gezielt auf das Objekt gelenkt werden, indem beispielsweise mittels der Benutzerschnittstelle eine Warnmeldung im Gesichtsfeld und/oder Sichtfeld des Benutzers angezeigt wird. Dreht der Benutzer dann seinen Kopf in Richtung des Objekts, so kann das Objekt dem Benutzer in einer von der Benutzerschnittstelle generierten Ansicht beispielsweise rot umrandet markiert werden. Alternativ oder zusätzlich kann beispielsweise die Zeit bis zur Kollision angezeigt werden. Eine solche visuelle Warnung kann beispielsweise durch akustische und/oder haptische Signale verstärkt werden. So kann ermöglicht werden, dass der Benutzer das Objekt rechtzeitig erkennt.

Das, insbesondere sicherheitsgerichtete, Signal kann ein visuelles, haptisches und/oder akustisches Signal, insbesondere Warnsignal, umfassen. Alternativ oder zusätzlich kann das Signal eine Handlungsempfehlung umfassen. Alternativ oder zusätzlich kann das Signal die Anpassung einer dem Benutzer angezeigten Information umfassen bzw. auslösen. Beispielsweise kann auf die Ausgabe des Signals hin ein dem Benutzer angezeigter Warnhinweis vergrößert und/oder in einer anderen Farbe angezeigt werden. Zusätzlich oder alternativ können andere angezeigten Hinweise entfernt und/oder neue Hinweise hinzugefügt werden. Insbesondere können angezeigte Hinweise, welche nicht akut wichtig sind, wie z.B. angezeigte Metainformationen oder Hilfestellungen oder Anweisungen für die von dem Benutzer ausgeführte Tätigkeit, ausgeblendet werden, um nicht die Aufmerksamkeit des Benutzers zu binden. Das Signal, insbesondere der Warnhinweis, kann zumindest eine geometrische Form (z.B. ein Dreieck), zumindest ein Symbol (z.B. ein Ausrufezeichen), Text, zumindest einen Pfeil oder ähnliches umfassen. Beispielweise kann dem Benutzer ein auf das Objekt gerichteter Pfeil und/oder eine Umrandung des Objekts angezeigt werden. Alternativ oder zusätzlich kann das Signal ein Steuersignal für das Objekt umfassen, wobei das Objekt auf den Empfang des Steuersignals hin in einen abgesicherten Steuerungsmodus versetzt wird.

Das Objekt kann beispielsweise einen händisch gesteuerten, sich teilautonom bewegenden oder autonom bewegenden Industrieroboter umfassen. Das Objekt kann insbesondere ein AGV oder AMR umfassen. Zusätzlich oder alternativ kann das Objekt einen anderen Benutzer umfassen. Zusätzlich oder alternativ kann das Objekt ein in einem Sicherheitssensor angelegtes ein Schutzfeld umfassen, wobei der Sicherheitssensor auf dem Industrieroboter angebracht ist und von diesem mitbewegt werden kann.

Das System kann ein System aus Sensoren umfassen, beispielsweise zumindest eine entfernungsmessende Kamera (z.B. stereoskopisch oder ToF), eine hochauflösende Kamers, in die Umgebung gerichtete Tracking-Kamera, Kamera zum Augentracking, eine Infrarot-Kamera, einen LiDAR Scanner, einen Laserscanner, einen Flickersensoren, einen Radarsensor, einen Ultraschallsensor, einen Umgebungslichtsensor, einen Geräuschsensor, eine Mikrophon, und/oder eine inertiale Messeinheit ("inertial measurement units", IMUs).

Die Benutzerschnittstelle kann ausgebildet sein, Informationen an den Benutzer auszugeben. Insbesondere ist vorstellbar, dass die Benutzerschnittstelle ausgebildet sein kann, Hinweise zur Benutzerführung an den Benutzer auszugeben, welche beispielsweise als Hilfestellungen oder Anweisungen für seine ausgeführte Tätigkeit dienen.

Der Umgebungssensor erfasst vorzugsweise zumindest einen Teil des Sichtfelds des Benutzers, vorzugsweise das volle Sichtfeld des Benutzers. Der Umgebungssensor erfasst vorzugsweise zusätzlich zumindest einen Teil außerhalb des Sichtfelds des Benutzers. Mit dem Gesichtsfeld des Benutzers kann jener Bereich gemeint sein, welchen der Benutzer ohne Augen- und Kopfbewegung erfassen kann. Das Sichtfeld bzw. Blickfeld entspricht dem Bereich, der von dem Benutzer durch zusätzliches Bewegen seiner Augen wahrgenommen werden kann.

Dem Umgebungssensor kann seine Ausrichtung und/oder Position bekannt sein. Der Umgebungssensor kann mit dem Kopf des Benutzers mitbewegt werden, sodass sich der von dem Umgebungssensor erfasste Bereich der Umgebung bei einem veränderten Blickfeld des Benutzers bevorzugt ebenfalls ändert.

Der Umgebungssensor umfasst vorzugsweise eine 3D-Kamera, einen Laserscanner, einen LiDAR-Scanner, einen Ultraschallsensor und/oder einen Radarsensor.

Der Umgebungssensor kann einen Lichtsender und einen Lichtempfänger umfassen. Sendelicht kann durch den mit dem Lichtempfänger gekoppelten und/oder gesteuerten Lichtsender erzeugt und in die Umgebung, insbesondere in der Form zumindest eines Überwachungs- und/oder Messtrahls, ausgesandt werden. Der Lichtempfänger kann von der Umgebung (insbesondere von Objekten in der Umgebung) remittiertes Sendelicht als Empfangslicht empfangen und basierend auf dem empfangenen Empfangslicht mittels Lichtlaufzeitverfahren Daten über die Umgebung, insbesondere von Objekten in der Umgebung, messen.

Die mittels dem Umgebungssensor gewonnen Daten über die Umgebung des Benutzers, insbesondere die Daten über das Objekt in der Umgebung des Benutzers, können Abstandswerte und Intensitätswerte umfassen. Die Abstandswerte können einen Abstand relativ zu dem Umgebungssensor angeben oder umgerechnet sein in Koordinatenwerte in einem globalen Koordinatensystem. Die Abstandswerte relativ zu dem Umgebungssensor können im Wesentlichen als Abstandswerte relativ zu dem Benutzer gesehen werden. Die Daten über die Umgebung des Benutzers können zusätzlich auch Geschwindigkeitswerte umfassen.

Mit dem Blick des Benutzers kann seine Blickrichtung und/oder Fokus gemeint sein. Der Parameter für die Aufmerksamkeit des Benutzers auf das Objekt kann ein Maß einer Wahrscheinlichkeit dafür angeben, dass der Benutzer das Objekt wahrgenommen hat. Der Parameter für die Aufmerksamkeit kann eine Fixationsdauer, Anzahl an Fixationen und/oder Zeit bis zur ersten Fixation umfassen.

Die Verarbeitungsvorrichtung kann einen Prozessor, einen Mikroprozessor, eine neuronale Verarbeitungseinheit (englisch "Neural Processor Unit", NPU) oder ähnliches umfassen. Zusätzlich oder alternativ kann die Verarbeitungsvorrichtung mit einem Remote-Server verbunden sein, wobei der Remote-Server Teile der Funktionen oder alle Funktionen der Verarbeitungsvorrichtung übernehmen kann. Der Verarbeitungsvorrichtung kann ihre eigene Position, die Position des Umgebungssensors und/oder die Position des Eye-Tracking-Sensors (in einem globalen Koordinatensystem oder relativ zu einer Komponente des Systems) bekannt sein.

In einem weiteren Schritt kann mittels Sensoren des Systems ermittelt werden, ob der Benutzer auf die Ausgabe des Signals hin reagiert hat (indem der Benutzer beispielsweise einen seitlichen Schritt vornimmt). Ist eine solche Reaktion nicht feststellbar, kann ein weiteres, insbesondere sicherheitsgerichtetes, Signal ausgeben werden. Beispielsweise können Warnhinweise wiederholt und/oder in ihrer Intensität verstärkt werden.

Gemäß einer Ausführungsform wird der Gefahrenzustand daran erkannt, dass der Parameter für die Aufmerksamkeit des Benutzers auf das Objekt gleich oder weniger als ein Aufmerksamkeitsgrenzwert ist und dass sich das Objekt in einem um den Benutzer angelegten Sicherheitsbereich befindet, in den Sicherheitsbereich bewegt oder innerhalb einer bestimmten Zeitspanne in den Sicherheitsbereich bewegen wird, einen Abstand zu dem Benutzer gleich oder weniger als einen Abstandsgrenzwert aufweist oder innerhalb einer bestimmten Zeitspanne einen Abstand zu dem Benutzer gleich oder weniger als den Abstandsgrenzwert aufweisen wird, eine Geschwindigkeit von gleich oder größer als einen Geschwindigkeitsgrenzwert aufweist, und/oder eine auf den Benutzer gerichtete Bewegungsrichtung aufweist.

Der Aufmerksamkeitsgrenzwert kann beispielsweise einen Fixationsdauergrenzwert umfassen, wobei der Fixationsdauergrenzwert vorzugsweise einen Wert zwischen 50 ms bis 2 s, bevorzugt zwischen 200 ms bis 600 ms, aufweisen kann. Vorteilhafterweise kann der Aufmerksamkeitsgrenzwert für jeden Benutzer individuell eingelernt werden. Während einer Fixierung kann von dem Benutzer nur ein eingeschränkter Bereich seines Blickfelds wahrgenommen werden. Nach einer Einschränkung des Blickfelds während einer Fixierung kann erst durch Sakkadenbewegungen der Augen das Blickfeld wieder vollständig abgescannt werden, um Gefahren wahrzunehmen. Dies kann besonders relevant sein, wenn der Benutzer seine Aufmerksamkeit während dem Ausführen einer Tätigkeit auf bestimmte Objekte konzentriert. Eine Beeinträchtigung der Aufmerksamkeit des Benutzers, wie z.B. die Einschränkung des Blickfelds während der Fixierung, kann von dem System über geeignete Wahl des Aufmerksamkeitsgrenzwertes, insbesondere des Fixationsdauergrenzwerts, berücksichtigt werden, sodass beispielsweise eher der Gefahrenzustand erkannt wird.

Gemäß einer Ausführungsform ist oder wird das Signal, welches an den Benutzer ausgegeben wird, in Abhängigkeit von dem ermittelten Parameter für die Aufmerksamkeit des Benutzers, dem ermittelten Abstand des Objekts, der ermittelten Position des Objekts, der ermittelten Bewegungsrichtung des Objekts und/oder der ermittelten Geschwindigkeit des Objekts des Objekts angepasst. Beispielsweise kann, wenn der Parameter für die Aufmerksamkeit innerhalb eines bestimmten Wertebereichs liegt, der Warnhinweis in einer bestimmten Größe (z.B. vergrößert oder verkleinert) angezeigt, der Warnhinweis in einer bestimmten Farbe (z.B. gelb, orange oder rot) angezeigt, der Warnhinweis mit oder ohne akustischem und/oder haptischem Signal ausgegeben und/oder der Warnhinweis mit oder ohne Versetzen des Objekts in einen abgesicherten Steuerungsmodus ausgegeben werden. Gleiches kann für den ermittelten Abstand, der ermittelten Position, der ermittelten Bewegungsrichtung und/oder der ermittelten Geschwindigkeit gelten. Auf diese Weise kann die Reaktion des Systems, insbesondere die an den Benutzer ausgegebene Informationsmenge, dynamisch angepasst werden. Das System kann auch erlauben, dass der Benutzer in gewissem Umfang selbst eine Auswahl für die angezeigten bzw. anzuzeigenden Informationen treffen kann.

Gemäß einer Ausführungsform ist die Verarbeitungsvorrichtung ausgebildet, auf die Erkennung des Gefahrenzustands hin das Objekt in einen abgesicherten Steuerungsmodus zu versetzen. Der abgesicherte Steuerungsmodus kann zum Beispiel eine Verlangsamung, einen Maschinenstopp, eine Änderung einer Route oder ein Verfahren in eine Halteposition umfassen.

Alternativ oder zusätzlich kann die Benutzerschnittstelle ausgebildet sein, einen Befehl des Benutzers zu empfangen. Das Objekt kann beispielsweise auf den Empfang des Befehls hin in den abgesicherten Steuerungsmodus versetzt werden. Das System (insbesondere die Verarbeitungsvorrichtung und/oder die Benutzerschnittstelle) und das Objekt können in kabelloser oder kabelgebundener Signalverbindung stehen. Der Befehl kann beispielsweise als Sprachbefehl, als eine Geste, als eine Berührung, als das Drücken eines Knopfes und/oder als das Bedienen eines Tastfeldes eingegeben werden.

Gemäß einer Ausführungsform kann der Umgebungssensor von dem Benutzer mitbewegt werden.

Die Benutzerschnittstelle kann ausgebildet sein, dem Benutzer, dem Benutzer zumindest einen Teil der Umgebung anzuzeigen. Die Benutzerschnittstelle kann einen Bildschirm, Touchscreen und/oder transparentes Glas umfassen.

Gemäß einer Ausführungsform umfasst das System ein Head-mounted-Eyetracking-System.

Gemäß einer Ausführungsform umfasst das System eine Augmented-Reality-Brille oder eine Virtual-Reality-Brille. Die Benutzerschnittstelle kann ausgebildet sein, dem Benutzer zumindest einen Teil der Umgebung in einer Augmented-Reality-Ansicht oder Virtual-Reality-Ansicht anzuzeigen.

Gemäß einer Ausführungsform umfasst die Benutzerschnittstelle eine Laserschutzbrille. Objekte, die sich in der Industrieanlage autonom bewegen, umfassen oft auf Laserlicht basierende Sensoren zur autonomen Steuerung. Die Laserschutzbrille der Benutzerschnittstelle kann somit eine Schädigung der Augen des Benutzers verhindern, welcher sich mit solchen Objekten in derselben Umgebung aufhält.

Gemäß einer Ausführungsform umfasst der Umgebungssensor einen Sicherheitssensor. Auf diese Weise kann die Sicherheit des Systems erhöht werden. Dabei können die hierin verwendeten Begriffe sicher oder Sicherheit im Sinne von bestimmten sicherheitsspezifischen Normen verstanden werden, wie beispielsweise ISO 13849, IEC 61508 oder IEC 62998.

Gemäß einer Ausführungsform ist auf dem Objekt kein Sicherheitssensor angebracht. Mit den hierin beschriebenen Vorgehensweisen kann eine Sicherheitsklasse und/oder Sicherheitslevel des Systems soweit erhöht werden, dass eine Sicherheitsklasse und/oder Sicherheitslevel erreicht werden kann, ohne dass spezielle Sicherheitssensorik auf dem Objekt verwendet werden muss. Somit kann kostenintensive Sicherheitssensorik auf dem Objekt weggelassen werden.

Gemäß einer Ausführungsform erfasst der Umgebungssensor das volle Sichtfeld des Benutzers und zusätzlich einen Bereich der Umgebung außerhalb des Sichtfelds des Benutzers. Auf diese Weise kann das System den Benutzer auf Gefahren aufmerksam machen, die sich außerhalb des Sichtfelds des Benutzers befinden, wodurch der Wahrnehmungsbereich des Benutzers effektiv erweitert werden kann.

Gemäß einer Ausführungsform umfasst das sicherheitsgerichtete Signal ein visuelles, akustisches und/oder haptisches Warnsignal. Vorzugsweise umfasst das sicherheitsgerichtete Signal eine Push-Nachricht.

Gemäß einer Ausführungsform umfasst das Objekt einen Industrieroboter und zumindest einen Sicherheitssensor, wobei in dem Sicherheitssensor ein Schutzfeld angelegt ist, wobei der Sicherheitssensor auf dem Industrieroboter angebracht ist. Mit einem Industrieroboter kann ein AMR oder AGV gemeint sein. Auf Verletzung des Schutzfeldes hin kann beispielsweise ein weiteres sicherheitsgerichtetes Signal ausgegeben werden. Der Sicherheitssensor kann von dem Industrieroboter mitbewegt werden. Gemäß der Ausführungsform ist der Umgebungssensor ausgebildet, Daten über das Schutzfeld zu gewinnen, die Benutzerschnittstelle ist ausgebildet, anhand der gewonnen Daten über das Schutzfeld das Schutzfeld für den Benutzer, vorzugsweise in einer Augmented-Reality-Ansicht oder Virtual-Reality-Ansicht, (z.B. als zumindest eine geometrische Form und/oder Textanzeige) zu visualisieren, und die Verarbeitungsvorrichtung ist ausgebildet, anhand der gewonnenen Eye-Tracking-Daten einen Parameter für die Aufmerksamkeit des Benutzers auf das visualisierte Schutzfeld zu ermitteln, einen Abstand des Schutzfelds, eine Position des Schutzfelds, eine Bewegungsrichtung des Schutzfelds und/oder eine Geschwindigkeit des Schutzfelds zu ermitteln, und den Gefahrenzustand anhand des ermittelten Parameters für die Aufmerksamkeit des Benutzers auf das visualisierte Schutzfeld und anhand des ermittelten Abstands des Schutzfelds, anhand der ermittelten Position des Schutzfelds, anhand der ermittelten Bewegungsrichtung des Schutzfelds und/oder anhand der ermittelten Geschwindigkeit des Schutzfelds zu erkennen. Die Verarbeitungsvorrichtung kann ausgebildet sein, anhand der gewonnenen Daten über das Objekt die Position des Industrieroboters, die Bewegungsrichtung des Industrieroboters und/oder die Geschwindigkeit des Industrieroboters zu ermittelt. Die Verarbeitungsvorrichtung kann ausgebildet sein, die Position des Schutzfelds, die Bewegungsrichtung des Schutzfelds und/oder die Geschwindigkeit des Schutzfelds basierend auf der ermittelten Position des Industrieroboters, der ermittelten Bewegungsrichtung des Industrieroboters und/oder der ermittelten Geschwindigkeit des Industrieroboters zu ermitteln. Der Umgebungssensor kann eine Kommunikationsschnittstelle umfassen und mit dem Sicherheitssensor und/oder mit dem Industrieroboter in kabelloser oder kabelgebundener Signalverbindung stehen, um die Daten über das Schutzfeld (z.B. Position an dem Industrieroboter, Ausrichtung und/oder Größe des Schutzfelds) zu erhalten und/oder abzurufen. Alternativ oder zusätzlich kann die Verarbeitungsvorrichtung ausgebildet sein, in den mittels des Umgebungssensors gewonnen Daten über das Objekt eine auf dem Industrieroboter und/oder Sicherheitssensor angebrachte Markierung, wie beispielsweise eine Kennung und/oder QR-Code, zu erkennen, um die Informationen über das Schutzfeld zu erhalten. Die Verarbeitungsvorrichtung kann beispielsweise anhand der erkannten Kennung die Informationen über das Schutzfeld von einem Remote-Server abrufen.

Gemäß einer Ausführungsform ist die Benutzerschnittstelle ausgebildet, an den Benutzer einen visuellen Warnhinweis auf das Objekt auszugeben, und die Verarbeitungsvorrichtung ist ausgebildet, anhand der gewonnenen Eye-Tracking-Daten einen Parameter für die Aufmerksamkeit des Benutzers auf den visuellen Warnhinweis zu ermitteln, und anhand des ermittelten Parameters für die Aufmerksamkeit des Benutzers auf das Objekt, anhand des ermittelten Parameters für die Aufmerksamkeit des Benutzers auf den visuellen Warnhinweis und anhand des ermittelten Abstands des Objekts, anhand der ermittelten Position des Objekts, anhand der ermittelten Bewegungsrichtung des Objekts und/oder anhand der ermittelten Geschwindigkeit des Objekts den Gefahrenzustand zu erkennen, wobei vorzugsweise die Verarbeitungsvorrichtung auf die Erkennung des Gefahrenzustands hin die Benutzerschnittstelle veranlasst, den visuellen Warnhinweis anzupassen. Der visuelle Warnhinweis weist vorzugsweise auf ein in einem auf dem Objekt angebrachten Sicherheitssensor angelegtes Schutzfeld hin. Vorzugsweise umfasst der visuelle Warnhinweis eine Visualisierung des Schutzfelds in einer Augmented-Reality-Ansicht oder Virtual-Reality-Ansicht.

Gemäß einer Ausführungsform ist der Umgebungssensor ausgebildet, Daten über zumindest ein weiteres Objekt in der Umgebung des Benutzers zu gewinnen, und die Verarbeitungsvorrichtung ist ausgebildet, anhand der gewonnenen Eye-Tracking-Daten einen Parameter für die Aufmerksamkeit des Benutzers auf das weitere Objekt zu ermitteln und basierend auf dem ermittelten Parameter für die Aufmerksamkeit des Benutzers auf das weitere Objekt die Benutzerschnittstelle zu veranlassen, ein weiteres Signal, insbesondere Anweisungen oder Informationen in Bezug auf das weitere Objekt, an den Benutzer auszugeben. Beispielsweise kann die Eye-Tracking Funktion auch dazu verwendet werden, gezielt Anweisungen oder Informationen zu Objekten anzuzeigen, welche der Benutzer länger betrachtet. So kann z.B. eine Zustandsinformation eines Industrieroboters bei längerem Betrachten als Info-Fenster angezeigt werden. In Kombination mit der Eingabe von Befehlen (z.B. Gesten) kann auch eine aktive Steuerung realisiert werden. Als weiteres Beispiel kann überprüft werden, ob der Benutzer seinen Blick suchend schweifen lässt und z.B. nicht (mehr) auf ein Werkstück fokussiert ist. Falls ja, kann mittels der Benutzerschnittstelle eine Anweisung oder Information für einen nächsten Tätigkeitsschritt angezeigt werden. Vorzugsweise umfasst das weitere Objekt einen Sicherheitssensor (bzw. einen Industrieroboter mit einem Sicherheitssensor) und die ausgegebenen Informationen umfassen Informationen in Bezug auf ein in dem Sicherheitssensor angelegtes Schutzfeld. Die Informationen in Bezug auf das weitere Objekt, insbesondere das Schutzfeld, können an den Benutzer beispielsweise als zumindest eine in einer Augmented-Reality oder Virtual-Reality-Ansicht visualisierte geometrische Form und/oder Textanzeige ausgegeben werden. Wie hierin beschrieben können die Informationen in Bezug auf das weitere Objekt mittels Erkennens einer Markierung und/oder Abrufs über eine Kommunikationsschnittstelle erhalten werden. Alternativ oder zusätzlich können die Informationen in Bezug auf das weitere Objekt in der Verarbeitungsvorrichtung vorgespeichert sein. Das weitere Objekt kann stationär in der Umgebung angeracht sein oder sich in der Umgebung bewegen. Alternativ oder zusätzlich können die Informationen in Bezug auf das weitere Objekt Informationen über das Sicherheitslevel des Sicherheitssensors umfassen. Für die Implantierung einer neuen Anwendung können neue Informationen über das weitere Objekt flexibel von dem System eingelernt bzw. in das System eingepflegt werden. Auf diese Weise kann insgesamt eine Benutzerführung realisiert werden, die flexibel auf neue Anwendungen anpassbar ist.

Gemäß einer Ausführungsform ist die Verarbeitungsvorrichtung ausgebildet, anhand der Eye-Tracking-Daten einen Parameter für die allgemeine Aufmerksamkeit des Benutzers zu ermitteln, und basierend auf dem ermittelten Parameter für die allgemeine Aufmerksamkeit des Benutzers die Benutzerschnittstelle zu veranlassen, ein weiteres, insbesondere sicherheitsgerichtetes, Signal an den Benutzer auszugeben. Beispielsweise kann Anhand eines Bewegungsmusters der Pupillen des Benutzers ermittelt werden, ob der Benutzer ermüdet und daher weniger konzentriert ist. Durch Ausgabe des weiteren sicherheitsgerichteten Signals kann die Aufmerksamkeit des Benutzers wieder erhöht werden, indem zum Beispiel eine dem Benutzer angezeigte Informationsmenge angepasst wird und/oder ein zusätzlicher Hinweis an den Benutzer ausgegeben wird, welcher den Benutzer auf seinen Müdigkeitszustand aufmerksam macht. Der Hinweis kann dem Benutzer eine Müdigkeitswarnung und/oder die Benötigung einer Pause anzeigen. Algorithmen zur Müdigkeitserkennung mittels Eyetracking sind grundsätzlich bekannt.

Gemäß einer Ausführungsform ist die Verarbeitungsvorrichtung ausgebildet, anhand der Eye-Tracking-Daten in bestimmten, insbesondere regelmäßigen, Zeitabständen einen Parameter für die Aufmerksamkeit des Benutzers auf das Objekt zu ermitteln, anhand der in den bestimmten Zeitabständen ermittelten Parameter für die Aufmerksamkeit des Benutzers auf das Objekt und anhand des ermittelten Abstands des Objekts, anhand der ermittelten Position des Objekts, anhand der ermittelten Bewegungsrichtung des Objekts und/oder anhand der ermittelten Geschwindigkeit des Objekts eine Prognose zu treffen, ob ein zeitlich vor einer vorausberechneten möglichen Kollision zwischen dem Benutzer und dem Objekt zu ermittelnder Parameter für die Aufmerksamkeit des Benutzers auf das Objekt einen Aufmerksamkeitsgrenzwert überschreiten wird, und den Gefahrenzustand basierend auf der Prognose zu erkennen. In anderen Worten kann das System eine Vorhersage treffen, mit welcher Wahrscheinlichkeit der Benutzer in seinem derzeitigen Zustand die Gefahr erkennen wird und schon frühzeitig auf die Gefahr aufmerksam machen.

Beispielsweise kann ein zeitlicher Verlauf für die in den bestimmten Zeitabständen ermittelten Parameter für die Aufmerksamkeit des Benutzers auf das Objekt nachverfolgt werden. Wenn dann in dem zeitlichen Verlauf für die Aufmerksamkeit des Benutzers auf das Objekt eine Stagnation oder einen Abwärtstrend (z.B. Steigung einer Kurve in einem Graph der Parameter aufgetragen gegen die Zeit ist nahe Null oder negativ) feststellbar ist und der Stagnation oder dem Abwärtstrend folgend vorausberechnet werden kann, dass der Parameter für die Aufmerksamkeit des Benutzers auf das Objekt den Aufmerksamkeitsgrenzwert vor der vorausberechneten Kollision (z.B. unter Berücksichtigung eines zeitlichen Sicherheitspuffers) nicht überschreiten wird, kann die negative Prognose getroffen werden, dass der Benutzer das Objekt nicht rechtzeitig wahrnehmen wird. Der Gefahrenzustand wird dann anhand dieser negativen Prognose erkannt und der Benutzer kann frühzeitig auf die Gefahr aufmerksam gemacht werden. Ist in dem zeitlichen Verlauf für die Aufmerksamkeit des Benutzers auf das Objekt dagegen ein Aufwärtstrend erkennbar (d.h. Steigung im positiven Bereich) und kann dem Aufwärtstrend folgend vorausberechnet werden, dass der Parameter für die Aufmerksamkeit des Benutzers auf das Objekt rechtzeitig vor der vorausberechneten Kollision (z.B. unter Berücksichtigung des zeitlichen Sicherheitspuffers) den Aufmerksamkeitsgrenzwert überschreiten wird, kann die positive Prognose getroffen werden, dass der Benutzer das Objekt rechtzeitig wahrnehmen wird. In diesem Fall liegt kein Gefahrenzustand vor. Zusätzlich oder alternativ kann das System durch maschinelles Lernen an den jeweiligen Benutzer angepasst werden.

Gemäß einer Ausführungsform umfasst das System das Objekt, insbesondere einen Industrieroboter (z.B. ein AMR oder AGV).

Das System kann ferner eine Kommunikationsschnittstelle für eine Kommunikation mit anderen Systemen in der Industrieanlage, insbesondere von anderen Benutzern genutzte System zur Benutzerführung und/oder Benutzerinteraktion, umfassen.

Mit dem hierin beschriebenen System kann ein Feedback-Mechanismus bereitgestellt werden, bei welchem eine Bewertung erfolgt, ob eine Gefahr von dem Benutzer wahrgenommen wurde und/oder wird, bei welchem eine dynamische Einschätzung der Umgebung bzw. von Objekten in der Umgebung vorgenommen wird und welcher ein möglichst frühzeitiges Eingreifen ermöglicht, was in der Folge insgesamt die Effizienz des Systems bei gleichzeitiger Reduktion des Unfallrisikos steigern kann. Das System kann Möglichkeiten zum (maschinellen) Einlernen auf den individuellen Benutzer eröffnen.

Weiterer Gegenstand der Erfindung ist eine Verwendung eines hierin beschriebenen Systems zur Benutzerführung eines Benutzers in einer Industrieanlage und/oder zur Benutzerinteraktion des Benutzers mit zumindest einem Objekt in der Industrieanlage.

Weiterer Gegenstand der Erfindung ist ein Verfahren zur Benutzerführung eines Benutzers in einer Industrieanlage und/oder zur Benutzerinteraktion des Benutzers mit zumindest einem Objekt in der Industrieanlage, umfassend Erfassen einer Umgebung des Benutzers in einer Industrieanlage, wobei zumindest einen Teil des Sichtfelds des Benutzers erfasst wird und dabei Daten über die Umgebung des Benutzers, insbesondere Daten über das Objekt in der Umgebung des Benutzers, gewonnen werden; Erfassen des Blicks des Benutzers mittels Eye-Tracking, wobei Eye-Tracking-Daten gewonnen werden; Ermitteln eines Abstands, einer Position, einer Bewegungsrichtung und/oder einer Geschwindigkeit des Objekts anhand der gewonnenen Daten über das Objekt; Ermitteln eines Parameters für die Aufmerksamkeit des Benutzers auf das Objekt anhand der gewonnenen Eye-Tracking-Daten; Erkennen eines Gefahrenzustandes anhand des ermittelten Parameters für die Aufmerksamkeit des Benutzers auf das Objekt und anhand des ermittelten Abstands des Objekts, anhand der ermittelten Position des Objekts, anhand der ermittelten Bewegungsrichtung des Objekts und/oder anhand der ermittelten Geschwindigkeit des Objekts; und Ausgeben eines, insbesondere sicherheitsgerichteten, Signals auf die Erkennung des Gefahrenzustands hin.

Es versteht sich, dass das bezüglich des erfindungsgemäßen Systems Beschriebene auch für die Verwendung des Systems und das Verfahren gilt. Dies gilt insbesondere für Ausführungsformen und Vorteile. Weiterhin ist es zu verstehen, dass alle hierin offenbarten Merkmale und Ausführungsformen kombiniert werden können, wenn nicht ausdrücklich anders angegeben.

Nachfolgend wird die Erfindung rein beispielhaft anhand möglicher Ausführungsformen unter Bezugnahme auf die beigefügte Zeichnung beschrieben. Es zeigen:
- Fig. 1: eine schematische Darstellung eines Systems zur Benutzerführung eines Benutzers in einer Industrieanlage und/oder zur Benutzerinteraktion Benutzers mit zumindest einem Objekt in der Industrieanlage;
- Fig. 2: eine schematische Darstellung eines Systems zur Benutzerführung eines Benutzers in einer Industrieanlage und/oder zur Benutzerinteraktion Benutzers mit zumindest einem Objekt in der Industrieanlage;
- Fig. 3: eine schematische Darstellung einer von der Benutzerschnittstelle des Systems aus Fig. 2 angezeigte Virtual-Reality-Ansicht der Umgebung;
- Fig. 4: eine schematische Darstellung eines von der Benutzerschnittstelle ausgegebenen sicherheitsgerichteten Signals;
- Fig. 5: eine schematische Darstellung eines von der Benutzerschnittstelle ausgegebenen sicherheitsgerichteten Signals;
- Fig. 6: eine schematische Darstellung eines von der Benutzerschnittstelle ausgegebenen sicherheitsgerichteten Signals;
- Fig. 7: eine schematische Darstellung eines von der Benutzerschnittstelle ausgegebenen sicherheitsgerichteten Signals.

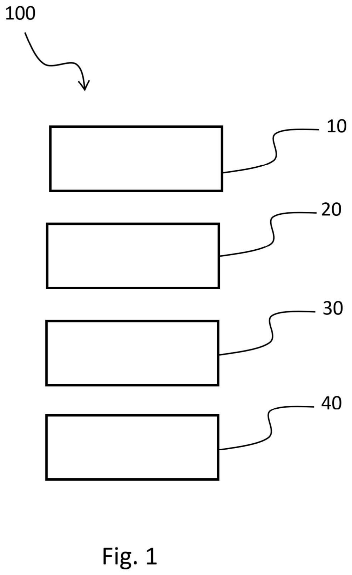

Fig 1 zeigt ein System 100 zur Benutzerführung eines Benutzers in einer Industrieanlage und/oder zur Benutzerinteraktion des Benutzers mit zumindest einem Objekt (nicht in Fig. 1 gezeigt) in der Industrieanlage. Das System 100 umfasst eine Benutzerschnittstelle 10, die ausgebildet ist, Informationen an den Benutzer auszugeben. Das System 100 umfasst ferner zumindest einen Umgebungssensor 20, der ausgebildet ist, eine Umgebung des Benutzers in einer Industrieanlage zu erfassen, wobei der Umgebungssensor 20 zumindest einen Teil des Sichtfelds des Benutzers erfasst, und dabei Daten über die Umgebung des Benutzers, insbesondere Daten über das Objekt in der Umgebung des Benutzers, zu gewinnen. Das System 100 umfasst ferner zumindest einen Eye-Tracking-Sensor 30, der ausgebildet ist, den Blick des Benutzers zu erfassen und dabei Eye-Tracking-Daten zu gewinnen. Das System 100 umfasst ferner eine Verarbeitungsvorrichtung 40, die dazu ausgebildet ist, anhand der gewonnenen Daten über das Objekt einen Abstand, eine Position, eine Bewegungsrichtung und/oder eine Geschwindigkeit des Objekts zu ermitteln, anhand der gewonnenen Eye-Tracking-Daten einen Parameter für die Aufmerksamkeit des Benutzers auf das Objekt zu ermitteln, anhand des ermittelten Parameters für die Aufmerksamkeit des Benutzers auf das Objekt und anhand des ermittelten Abstands des Objekts, anhand der ermittelten Position des Objekts, anhand der ermittelten Bewegungsrichtung des Objekts und/oder anhand der ermittelten Geschwindigkeit des Objekts einen Gefahrenzustand zu erkennen, und auf die Erkennung des Gefahrenzustands hin die Benutzerschnittstelle zu veranlassen, ein sicherheitsgerichtetes Signal auszugeben. Die Benutzerschnittstelle 10 kann ausgebildet sein, an den Benutzer einen visuellen Warnhinweis auf das Objekt auszugeben.

Zudem ist vorstellbar, dass die Benutzerschnittstelle 10 ausgebildet ist, weitere Hinweise zur Benutzerführung an den Benutzer auszugeben, welche beispielsweise als Hilfestellungen oder Anweisungen für seine ausgeführte Tätigkeit dienen. Beispielsweise kann die Benutzerschnittstelle 10 Anweisungen anzeigen, um den Benutzer zu einer bestimmten Position in der Industrieanlage zu navigieren, z.B. zu einer nächstgelegenen Wartungsstelle oder einer Maschine. Vorteilhafterweise kann bei der Navigation eine Route verwendet werden, die in einem bestimmten Zeitfenster von keinem Objekt befahren wird. Zusätzlich oder alternativ kann Benutzerschnittstelle 10 die Anweisung anzeigen, dass der Benutzer eine M3 Schraube in ein markiertes Loch an einem Werkstück schrauben soll. Das System 100 kann prüfen, ob die richtige Schraube an die richtige Stelle eingeschraubt wird oder worden ist. Falls ja, kann die Schraube und/oder das Loch mittels der Benutzerschnittstelle 10 in einer Farbe, z.B. grün, markiert werden. Dadurch kann sowohl eine Anweisung an den Benutzer als auch eine Kontrolle von dessen Tätigkeit bereitgestellt werden. Die Anzeige der Hinweise, insbesondere Häufigkeit der Anzeige der Hinweise, kann vorteilhafterweise an das Verhalten des Benutzers angepasst werden. Zum Beispiel kann das System feststellen, dass der Benutzer seinen Blick suchend über das Werkstück schweifen lässt. Dann kann mittels der Benutzerschnittstelle 10 die nächste Anweisung für den nächsten Tätigkeitsschritt angezeigt werden. Bei Benutzern, die ohne erkennbare Hilfsbedürftigkeit die richtigen Schrauben eindrehen, kann vorteilhafterweise nur im Fehlerfall (z.B. falsche Schraube, falsches Loch) ein Hinweis angezeigt werden.

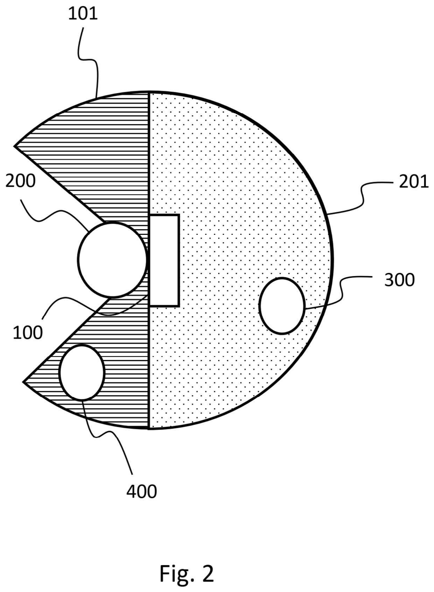

Wie in Fig. 2 schematisch dargestellt kann das System 100 ein Head-mounted-Eyetracking-System umfassen bzw. ein Head-mounted-Eyetracking-System sein. Vorzugsweise umfasst das System 100 eine Virtual-Reality-Brille, die von dem Benutzer 200 am Kopf getragen werden kann. Es versteht sich, dass in den hier beschriebenen Beispielen auch jeweils eine Augmented-Reality-Brille oder ein anderes Gerät zur Darstellung einer Augmented-Reality verwendet werden könnte.

Das in Fig. 2 gezeigte System kann die gleichen oder ähnliche Komponenten wie das in Fig. 1 gezeigte System umfassen. Der Umgebungssensor des Systems 100 in Fig. 2 kann das volle Sichtfeld 201 (z.B. ein Winkelbereich von 180°) des Benutzers 200 und zusätzlich einen Bereich 101 außerhalb des Sichtfelds 201 des Benutzers erfassen. Auf diese Weise kann das System 100, wie in Fig. 2 dargestellt, sowohl Daten über das Objekt 300 in dem Sichtfeld 201 des Benutzers 200 als auch Daten über ein weiteres Objekt 400 außerhalb des Sichtfelds 201 des Benutzers 200 gewinnen und dementsprechend an den Benutzer 200 sowohl einen Warnhinweis in Bezug auf das Objekt 300 als auch einen weiteren Warnhinweis in Bezug auf das weitere Objekt 400 ausgeben. Auf diese Weise kann der Wahrnehmungsbereich des Benutzers 200 erweitert werden.

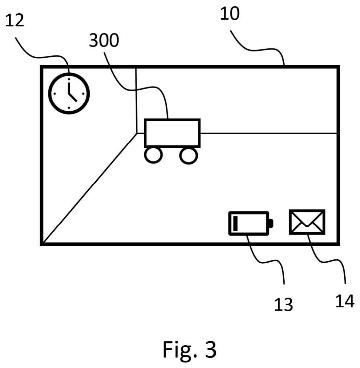

Fig. 3 zeigt eine schematische Darstellung einer Virtual-Reality-Ansicht eines Teils der Umgebung in der Industrieanlage, wie sich dem Benutzer von der Benutzerschnittstelle 10 des Systems aus Fig. 2 angezeigt werden kann. Wie in Fig. 3 dargestellt können dem Benutzer in der von der Benutzerschnittstelle 10 generierten Virtual-Reality-Ansicht sowohl die Umgebung, in der sich das Objekt 300 (hier als Beispiel ein AGV) befinden kann, als auch bestimmte allgemeine Hinweise angezeigt werden, wie beispielsweise einen Hinweis 12 auf die Uhrzeit, eine Hinweis 13 auf den Ladezustand des Systems (insbesondere der Virtual-Reality-Brille) und einen Hinweis 14 auf eine erhaltene Nachricht.

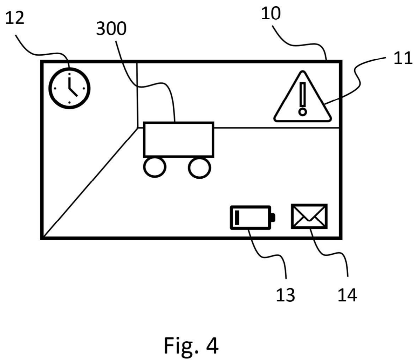

Wie in Fig. 4 dargestellt kann sich das autonom bewegenden Objekt 300 dem Benutzer nähern, woraufhin das System den Gefahrenzustand (z.B. bei einer Annäherung bis auf einen Abstandsgrenzwert) feststellen kann. Die Benutzerschnittstelle 10 gibt dann in der Virtual-Reality-Ansicht einen Warnhinweis 11 auf das Objekt 300 aus, um den Benutzer auf die Gefahr bzw. das Objekt 300 aufmerksam zu machen.

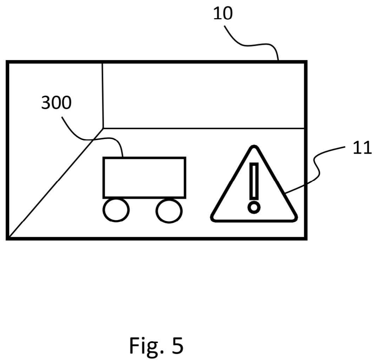

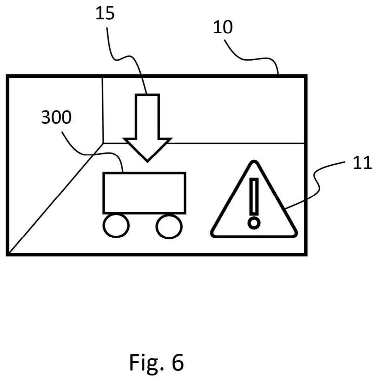

Fig. 5 und Fig. 6 zeigen jeweils eine Anpassung der in Fig. 4 dargestellten Virtual-Reality-Ansicht. Die Verarbeitungsvorrichtung des Systems kann ausgebildet sein, anhand der gewonnenen Eye-Tracking-Daten einen Parameter für die Aufmerksamkeit des Benutzers auf den visuellen Warnhinweis 11 zu ermitteln, und anhand des ermittelten Parameters für die Aufmerksamkeit des Benutzers auf das Objekt 300, anhand des ermittelten Parameters für die Aufmerksamkeit des Benutzers auf den visuellen Warnhinweis 11 und anhand des ermittelten Abstands des Objekts 300, anhand der ermittelten Position des Objekts 300, anhand der ermittelten Bewegungsrichtung des Objekts und/oder anhand der ermittelten Geschwindigkeit des Objekts den Gefahrenzustand zu erkennen. Die Verarbeitungsvorrichtung kann dann auf die Erkennung des Gefahrenzustands hin die Benutzerschnittstelle 10 veranlassen, den visuellen Warnhinweis 11 anzupassen. Wie in Fig. 5 und Fig. 6 dargestellt kann der Warnhinweis vergrößert und/oder an einer anderen Position in der Virtual-Reality-Ansicht angezeigt werden. Zusätzlich können die anderen Hinweise 12, 13, 14 ausgeblendet werden. Zudem kann zumindest ein weiterer Warnhinweis 15 auf das Objekt 300 angezeigt werden, wie hier in Fig. 6 ein auf das Objekt 300 zeigender Pfeil. Es versteht sich, dass zusätzlich zu dem visuellen Warnhinweis 11 auch akustische und/oder haptische Warnsignale an den Benutzer ausgegeben werden können.

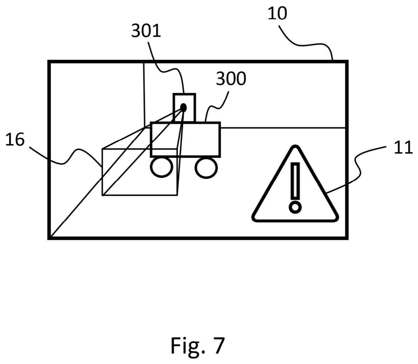

Wie in Fig. 7 dargestellt kann dem Benutzer auch eine Visualisierung eines Schutzfelds 16, welches in einem auf dem Objekt 300 angebrachten Sicherheitssensor 301 angelegt ist, angezeigt werden. Wie für Fig. 5 und Fig. 6 beschrieben kann von dem System ein Parameter für die Aufmerksamkeit des Benutzers auf das visualisierte Schutzfeld 16 (wie in Fig. 7 gezeigt) ermittelt und bei der Erkennung des Gefahrenzustands berücksichtigt werden.

### Bezugszeichenliste

- 10: Benutzerschnittstelle
- 20: Umgebungssensor
- 30: Eye-Tracking-Sensor
- 40: Verarbeitungsvorrichtung
- 11: visueller Warnhinweis
- 12: Hinweis auf die Uhrzeit
- 13: Hinweis auf den Ladezustand
- 14: Hinweis auf eine erhaltene Nachricht
- 15: weiterer Warnhinweis
- 16: visualisiertes Schutzfeld
- 100: System
- 101: Bereich außerhalb des Sichtfelds des Benutzers
- 200: Benutzer
- 201: Sichtfeld des Benutzers
- 300: Objekt
- 301: Sicherheitssensor
- 400: weiteres Objekt

## Patentansprüche

1. System (100) zur Benutzerführung eines Benutzers (200) in einer Industrieanlage und/oder zur Benutzerinteraktion des Benutzers (200) mit zumindest einem Objekt (300) in der Industrieanlage, umfassend eine Benutzerschnittstelle (10);
zumindest einen Umgebungssensor (20), der ausgebildet ist, eine Umgebung des Benutzers (200) in einer Industrieanlage zu erfassen, wobei der Umgebungssensor (20) zumindest einen Teil des Sichtfelds (201) des Benutzers (200) erfasst, und dabei Daten über die Umgebung des Benutzers (200), insbesondere Daten über das Objekt (300) in der Umgebung des Benutzers (200), zu gewinnen;
zumindest einen Eye-Tracking-Sensor (30), der ausgebildet ist, den Blick des Benutzers (200) zu erfassen und dabei Eye-Tracking-Daten zu gewinnen; und
eine Verarbeitungsvorrichtung (40), die dazu ausgebildet ist,
anhand der gewonnenen Daten über das Objekt (300) einen Abstand, eine Position, eine Bewegungsrichtung und/oder eine Geschwindigkeit des Objekts (300) zu ermitteln,
anhand der gewonnenen Eye-Tracking-Daten einen Parameter für die Aufmerksamkeit des Benutzers (200) auf das Objekt (300) zu ermitteln,
anhand des ermittelten Parameters für die Aufmerksamkeit des Benutzers (200) auf das Objekt (300) und anhand des ermittelten Abstands des Objekts (300), anhand der ermittelten Position des Objekts (300), anhand der ermittelten Bewegungsrichtung des Objekts (300) und/oder anhand der ermittelten Geschwindigkeit des Objekts (300) einen Gefahrenzustand zu erkennen, und
auf die Erkennung des Gefahrenzustands hin die Benutzerschnittstelle (10) zu veranlassen, ein, insbesondere sicherheitsgerichtetes, Signal (11, 15, 16) auszugeben.

2. System (100) nach Anspruch 1, wobei der Gefahrenzustand daran erkannt wird, dass der Parameter für die Aufmerksamkeit des Benutzers (200) auf das Objekt (300) gleich oder weniger als ein Aufmerksamkeitsgrenzwert ist und sich das Objekt (300) in einem um den Benutzer (200) angelegten Sicherheitsbereich befindet, in den Sicherheitsbereich bewegt oder innerhalb einer bestimmten Zeitspanne in den Sicherheitsbereich bewegen wird, einen Abstand zu dem Benutzer (200) gleich oder weniger als einen Abstandsgrenzwert aufweist oder innerhalb einer bestimmten Zeitspanne einen Abstand zu dem Benutzer (200) gleich oder weniger als den Abstandsgrenzwert aufweisen wird, eine Geschwindigkeit von gleich oder größer als einen Geschwindigkeitsgrenzwert aufweist, und/oder eine auf den Benutzer (200) gerichtete Bewegungsrichtung aufweist.

3. System (100) nach Anspruch 1 oder 2, wobei das Signal (11, 15, 16), welches an den Benutzer (200) ausgegeben wird, in Abhängigkeit von dem ermittelten Parameter für die Aufmerksamkeit des Benutzers (200), dem ermittelten Abstand des Objekts (300), der ermittelten Position des Objekts (300), der ermittelten Bewegungsrichtung des Objekts (300) und/oder der ermittelten Geschwindigkeit des Objekts (300) angepasst ist oder wird.

4. System (100) nach einem der voranstehenden Ansprüche,
wobei die Verarbeitungsvorrichtung (40) ausgebildet ist, auf die Erkennung des Gefahrenzustands hin das Objekt (300) in einen abgesicherten Steuerungsmodus zu versetzen; und/oder
wobei die Benutzerschnittstelle (10) ausgebildet ist, einen Befehl des Benutzers (200) zu empfangen, wobei das Objekt (300) auf den Empfang des Befehls hin in den abgesicherten Steuerungsmodus versetzt wird.

5. System (100) nach einem der voranstehenden Ansprüche,
wobei der Umgebungssensor (20) von dem Benutzer (200) mitbewegt werden kann;
wobei das System (100) vorzugsweise ein Head-mounted-Eyetracking-System umfasst; und/oder
wobei das System (100) eine Augmented-Reality-Brille oder eine Virtual-Reality-Brille umfasst.

6. System (100) nach einem der voranstehenden Ansprüche,
wobei die Benutzerschnittstelle (10) eine Laserschutzbrille umfasst;
wobei der Umgebungssensor (20) einen Sicherheitssensor umfasst; und/oder
wobei auf dem Objekt kein Sicherheitssensor angebracht ist.

7. System (100) nach einem der voranstehenden Ansprüche, wobei der Umgebungssensor (20) das volle Sichtfeld (201) des Benutzers (200) erfasst und zusätzlich einen Bereich (101) der Umgebung außerhalb des Sichtfelds des Benutzers (200) erfasst.

8. System (100) nach einem der voranstehenden Ansprüche, wobei das sicherheitsgerichtete Signal (11, 15, 16) ein visuelles, akustisches und/oder haptisches Warnsignal umfasst, wobei das sicherheitsgerichtete Signal (11, 15, 16) vorzugsweise eine Push-Nachricht umfasst.

9. System (100) nach einem der voranstehenden Ansprüche,
wobei das Objekt (300) einen Industrieroboter und zumindest einen Sicherheitssensor (301) umfasst, wobei in dem Sicherheitssensor (301) ein Schutzfeld angelegt ist, wobei der Sicherheitssensor (301) auf dem Industrieroboter angebracht ist;
wobei der Umgebungssensor (20) ausgebildet ist, Daten über das Schutzfeld zu gewinnen,
wobei die Benutzerschnittstelle (10) ausgebildet ist, anhand der gewonnenen Daten über das Schutzfeld das Schutzfeld für den Benutzer (200), vorzugsweise in einer Augmented-Reality-Ansicht oder Virtual-Reality-Ansicht, zu visualisieren, und
wobei die Verarbeitungsvorrichtung (40) ausgebildet ist,
anhand der gewonnenen Eye-Tracking-Daten einen Parameter für die Aufmerksamkeit des Benutzers (200) auf das visualisierte Schutzfeld (16) zu ermitteln,
einen Abstand des Schutzfelds, eine Position des Schutzfelds, eine Bewegungsrichtung des Schutzfelds und/oder eine Geschwindigkeit des Schutzfelds zu ermitteln; und
den Gefahrenzustand anhand des ermittelten Parameters für die Aufmerksamkeit des Benutzers (200) auf das visualisierte Schutzfeld (16) und anhand des ermittelten Abstands des Schutzfelds, anhand der ermittelten Position des Schutzfelds, anhand der ermittelten Bewegungsrichtung des Schutzfelds und/oder anhand der ermittelten Geschwindigkeit des Schutzfelds zu erkennen.

10. System (100) nach einem der voranstehenden Ansprüche,
wobei die Benutzerschnittstelle (10) ausgebildet ist, an den Benutzer (200) einen visuellen Warnhinweis (11, 15, 16) auf das Objekt (300) auszugeben, wobei der visuelle Warnhinweis (16) vorzugsweise auf ein in einem auf dem Objekt (300) angebrachten Sicherheitssensor (301) angelegtes Schutzfeld hinweist, wobei der visuelle Warnhinweis (16) vorzugsweise eine Visualisierung des Schutzfelds in einer Augmented-Reality-Ansicht oder Virtual-Reality-Ansicht umfasst; und
wobei die Verarbeitungsvorrichtung (40) ausgebildet ist,
anhand der gewonnenen Eye-Tracking-Daten einen Parameter für die Aufmerksamkeit des Benutzers (200) auf den visuellen Warnhinweis (11, 15, 16) zu ermitteln, und
anhand des ermittelten Parameters für die Aufmerksamkeit des Benutzers (200) auf das Objekt (300), anhand des ermittelten Parameters für die Aufmerksamkeit des Benutzers (200) auf den visuellen Warnhinweis (11, 15, 16) und anhand des ermittelten Abstands des Objekts (300), anhand der ermittelten Position des Objekts (300), anhand der ermittelten Bewegungsrichtung des Objekts (300) und/oder anhand der ermittelten Geschwindigkeit des Objekts (300) den Gefahrenzustand zu erkennen, wobei vorzugsweise die Verarbeitungsvorrichtung (40) auf die Erkennung des Gefahrenzustands hin die Benutzerschnittstelle (10) veranlasst, den visuellen Warnhinweis (11, 15, 16) anzupassen.

11. System (100) nach einem der voranstehenden Ansprüche,
wobei der Umgebungssensor (20) ausgebildet ist, Daten über zumindest ein weiteres Objekt in der Umgebung des Benutzers (200) zu gewinnen; und
wobei die Verarbeitungsvorrichtung (40) ausgebildet ist, anhand der gewonnenen Eye-Tracking-Daten einen Parameter für die Aufmerksamkeit des Benutzers (200) auf das weitere Objekt zu ermitteln und basierend auf dem ermittelten Parameter für die Aufmerksamkeit des Benutzers (200) auf das weitere Objekt die Benutzerschnittstelle (10) zu veranlassen, ein weiteres Signal, insbesondere Anweisungen oder Informationen in Bezug auf das weitere Objekt, an den Benutzer (200) auszugeben, wobei vorzugsweise das weitere Objekt einen Sicherheitssensor umfasst und die ausgegeben Informationen Informationen in Bezug auf ein in dem Sicherheitssensor angelegtes Schutzfeld umfassen.

12. System (100) nach einem der voranstehenden Ansprüche,
wobei die Verarbeitungsvorrichtung (40) ausgebildet ist,
anhand der Eye-Tracking-Daten einen Parameter für die allgemeine Aufmerksamkeit des Benutzers (200) zu ermitteln, und
basierend auf dem ermittelten Parameter für die allgemeine Aufmerksamkeit des Benutzers (200) die Benutzerschnittstelle (10) zu veranlassen, ein weiteres, insbesondere sicherheitsgerichtetes, Signal an den Benutzer (200) auszugeben.

13. System (100) nach einem der voranstehenden Ansprüche, wobei die Verarbeitungsvorrichtung (40) ausgebildet ist,
anhand der Eye-Tracking-Daten in bestimmten, insbesondere regelmäßigen, Zeitabständen einen Parameter für die Aufmerksamkeit des Benutzers (200) auf das Objekt (300) zu ermitteln,
anhand der in den bestimmten Zeitabständen ermittelten Parameter für die Aufmerksamkeit des Benutzers (200) auf das Objekt (300) und anhand des ermittelten Abstands des Objekts (300), anhand der ermittelten Position des Objekts (300), anhand der ermittelten Bewegungsrichtung des Objekts (300) und/oder anhand der ermittelten Geschwindigkeit des Objekts (300) eine Prognose zu treffen, ob ein zeitlich vor einer vorausberechneten möglichen Kollision zwischen dem Benutzer (200) und dem Objekt (300) zu ermittelnder Parameter für die Aufmerksamkeit des Benutzers (200) auf das Objekt (300) einen Aufmerksamkeitsgrenzwert überschreiten wird, und
den Gefahrenzustand basierend auf der Prognose zu erkennen.

14. Verwendung eines Systems (100) nach einem der voranstehenden Ansprüche zur Benutzerführung eines Benutzers (200) in einer Industrieanlage und/oder zur Benutzerinteraktion des Benutzers (200) mit zumindest einem Objekt (300) in der Industrieanlage.

15. Verfahren zur Benutzerführung eines Benutzers (200) in einer Industrieanlage und/oder zur Benutzerinteraktion des Benutzers (200) mit zumindest einem Objekt (300) in der Industrieanlage, umfassend
Erfassen einer Umgebung des Benutzers (200) in einer Industrieanlage, wobei zumindest einen Teil des Sichtfelds (201) des Benutzers (200) erfasst wird und dabei Daten über die Umgebung des Benutzers (200), insbesondere Daten über das Objekt (300) in der Umgebung des Benutzers (200), gewonnen werden;
Erfassen des Blicks des Benutzers (200) mittels Eye-Tracking, wobei Eye-Tracking-Daten gewonnen werden;
Ermitteln eines Abstands, einer Position, einer Bewegungsrichtung und/oder einer Geschwindigkeit des Objekts (300) anhand der gewonnenen Daten über das Objekt (300);
Ermitteln eines Parameters für die Aufmerksamkeit des Benutzers (200) auf das Objekt (300) anhand der gewonnenen Eye-Tracking-Daten;
Erkennen eines Gefahrenzustands anhand des ermittelten Parameters für die Aufmerksamkeit des Benutzers (200) auf das Objekt (300) und anhand des ermittelten Abstands des Objekts (300), anhand der ermittelten Position des Objekts (300), anhand der ermittelten Bewegungsrichtung des Objekts (300) und/oder anhand der ermittelten Geschwindigkeit des Objekts (300); und
Ausgeben eines, insbesondere sicherheitsgerichteten, Signals (11, 15, 16) auf die Erkennung des Gefahrenzustands hin.
